# EUROPEAN PATENT APPLICATION

(11) **EP 3 878 698 A1**
(43) Date of publication of application: **15.09.2021**
(21) Application number: 20210279.4
(22) Date of filing: 27.11.2020
(51) Int. Cl.: B60R 16/02, H02G 3/32, F16L 3/223

(54) **CABLE MANAGEMENT SYSTEM**

(30) Priority: 13.03.2020 EP 20162916
(71) Applicant: Illinois Tool Works INC., Glenview, IL 60025 (US)
(72) Inventor: HUET, Laurent, Glenview, Illinois 60025 (US)
(74) Representative: HGF

(57) **Abstract**

There is provided a cable management system comprising a base plate for secure attachment to a surface; and a cable support member releasably connectable to the base plate and configured to securely receive at least one cable on an upper surface thereof; wherein the releasable connection between the cable support member and the base plate comprises mutually mating first interconnections at first respective ends of the base plate and the cable support member forming a releasable hinged connection, and mutually mating second interconnections at second respective ends of the base plate and the cable support member forming a releasable locked connection, whereby the cable support member is engageable with the base plate via the first interconnections with the cable support member in a first engaging position, and whereby the cable support member is pivotable between the first engaging position and a secured position in which the cable support member is securely retained against the base plate via the second interconnections, and wherein the cable support member is engageable with the base plate and pivotable to the secured position with a tie member looped beneath at least a portion of the underside of the cable support member and over a cable on the upper surface thereof.

## Description

This invention relates generally to a cable management system for securing one or more cables to a surface. More specifically, although not exclusively, this invention relates to a cable management system for use in securing a wiring harnesses to a vehicle.

Vehicles may include numerous electrical components that need to receive or transmit electrical power and signals. These may be electrically connected over bundles of cables in a so-called wiring loom or harness. Moreover, electric vehicles (EVs), require high voltage transmission of electricity between the electrical storage (e.g. batteries) and the electric vehicle control unit (EVCU) and the electric motor(s) that drive the vehicle, and this is achieved over a high voltage wire harness.

Installation and maintenance of wire harnesses on a vehicle can be cumbersome because of the weight of the harness and the need to align the cables in it according to the manufacturer's specifications, often in confined spaces.

It is a non-exclusive object of the invention to provide a simpler and/or improved cable management system that mitigates at least some of the drawbacks of known assembly methods.

Accordingly, a first aspect of the invention provides a cable management system comprising:
a base plate for secure attachment to a surface; and
a cable support member releasably connectable to the base plate and configured to securely receive at least one cable on an upper surface thereof;
wherein the releasable connection between the cable support member and the base plate comprises mutually mating first interconnections at first respective ends of the base plate and the cable support member forming a releasable hinged connection, and mutually mating second interconnections at second respective ends of the base plate and the cable support member forming a releasable locked connection,
whereby the cable support member is engageable with the base plate via the first interconnections with the cable support member in a first engaging position, and whereby the cable support member is pivotable between the first engaging position and a secured position in which the cable support member is securely retained against the base plate via the second interconnections, and
wherein the cable support member is engageable with the base plate and pivotable to the secured position with a tie member looped beneath at least a portion of the underside of the cable support member and over a cable on the upper surface thereof.

The first interconnections may comprise a female member on the first end of the base plate with a concave inner surface and a mouth open towards the second end, and a male member on the first end of the cable support member with a substantially cylindrical convex outer surface matching the concave inner surface of the female member, whereby engagement of the cable support member with the base plate is achieved by sliding the male member through the mouth and into engagement with the female member.

The second interconnections may comprise a resiliently deflectable finger projecting from the upper surface of the base plate and a corresponding slot through the cable support member through which a hook at a free end of the finger may be passed to snap into engagement against the upper surface of the cable support member.

The base plate may include a fastening mechanism to attach the base plate to the surface.

The upper surface of the cable support member may include a guide feature to align the cable to a desired orientation.

The cable support member may include a cable tie guide.

The cable management system may be for use in attaching cables, such as wiring harnesses to a surface of a vehicle. Accordingly, another aspect of the invention provides a vehicle comprising a cable management system as described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
**Figure 1** is a top perspective view of a cable management system according to an embodiment of the invention;
**Figures 2A** and **2B** are corresponding top perspective views, from a reverse angle, of a base plate and a cable support member of the cable management system in a disassembled state;
**Figures 3A** and **3B** are respective side and top perspective views of assembly of the cable support member with the base plate to form the cable management system according to an embodiment of the invention;
**Figure 4** is a side view of the cable management system according to an embodiment of the invention showing an exemplary arrangement of cables thereon;
**Figures 5A** and **5B** are respective top perspective and bottom plan views of a cable support member according to an embodiment of the invention showing routes for the passage of associated cable ties;
**Figures 6A** to **6C** are schematic side views of different arrangements of cables supported on a cable support member according to an embodiment of the invention;
**Figures 7A** to **7C** are respective perspective views of different fastening mechanism arrangements for securing the base plate to a surface, and
**Figure 8** is a top perspective view of a cable management system according to another embodiment, having a different upper surface.

Referring now to the Figures, there is shown a cable management system 10 for use in securing cables, such as electric cables 12 to a surface (not shown), for example the cables of an electric wiring loom or harness to a surface of a vehicle (not shown). The invention is described in the context of securing wiring harnesses to vehicles, but it will be understood that the invention has wider application to the general affixation of cables to surfaces.

The cable management system 10 generally comprises a base plate 20, which is for secure attachment to a surface, and a cable support member 40. The base plate 20 and the cable support member 40 are formed of a plastic material, for example by injection moulding. One suitable material is Polyamide 6.6, typically with 30% glass fiber to reinforce and also to increase the usable temperature range, which can be beneficial in the case of high voltage cables. The cable support member 40 is configured to securely receive at least one cable 12 on an upper surface 42 thereof and is releasably connectable to the base plate 20. Thus, by connecting the cable support member 40 to the base plate 20, the at least one cable 12 is secured to the surface.

The base plate 20 has a generally flat rectangular shape and comprises a body portion 22 with a flat upper surface 24. At a first end 26 of the base plate 20 is a female shroud 28 which projects upwardly of the upper surface 24 and which defines a generally rectangular mouth 30 that extends across the width of the body portion 22 and is open towards an opposed second end 27 of the base plate 20. An interior concave surface 29 of the shroud 28 is generally cylindrical in shape. A resiliently deflectable cantilever finger 36 projects upwardly centrally from an opposed second end 27 and has a hook 37 at the free end thereof. A transverse slot 25 extends across the width of the base plate 20 near the second end 27. A pair of flanges 23a, 23b extend outwardly from the respective first and second ends 26, 27. Integral leaf springs 38 project downwardly from an underside 39 of the body portion 22.

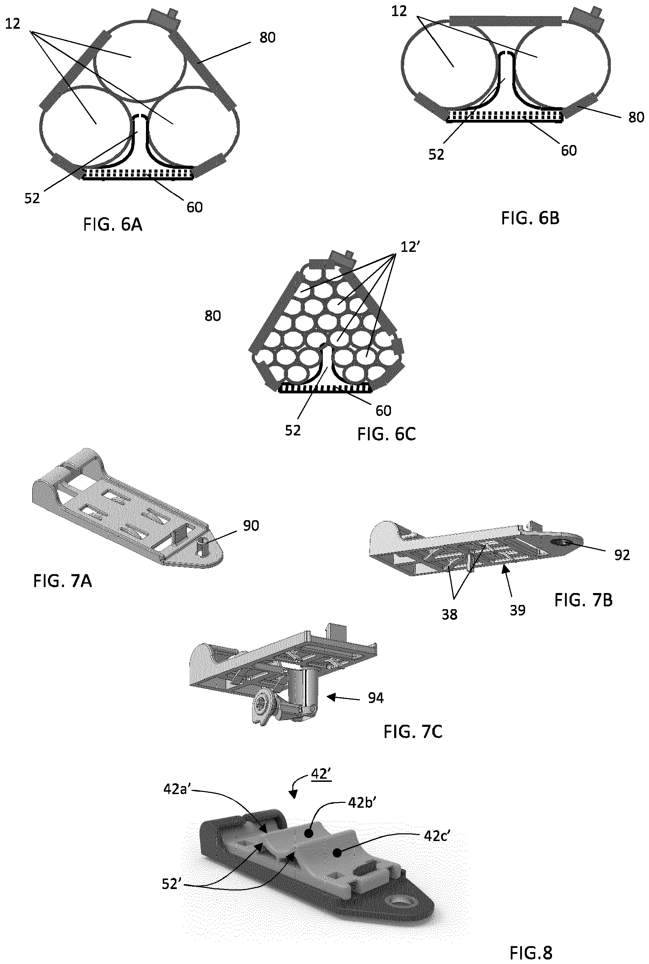

The base plate 20 may be secured to the surface by any suitable fastening mechanism. Several options are illustrated in Figures 7A to 7C, including: a stud 90 for receiving a corresponding peg (not shown) affixed to and projecting from the surface; a metal insert 92, which may be threaded, to receive a threaded fastener (not shown) therethrough for receipt in a corresponding hole in the surface, the metal insert 92 providing a stronger reinforced connection than a simple hole through the plastic material of the base plate 20; and a press-fit screwless fixing 94, such as disclosed in WO2018/009288A1. Other ways of affixing the base plate 20 to the surface will be readily apparent to the skilled person, including driving self-tapping screws (not shown) through the flanges 23a, 23b and into the underlying surface, and/or using adhesive. As the base plate 20 is secured to the underlying surface, the leaf springs 38 are compressed. In use, the resulting restorative forces maintain the base plate 20 in tension, thereby accommodating vibrations and nuisance noises that might be caused by movement of the vehicle.

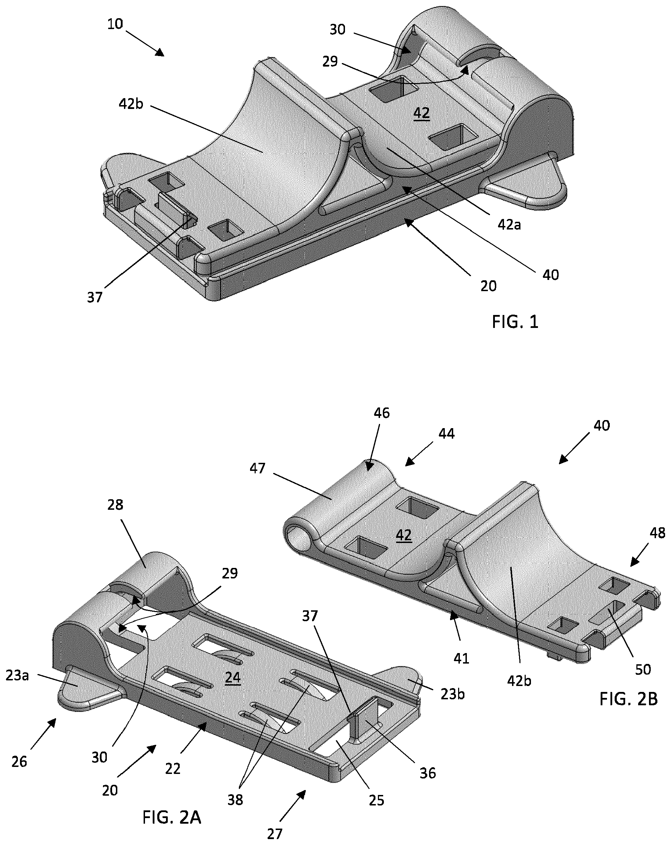

The cable support member 40 has a generally rectangular shape corresponding to that of the associated base plate 20 and comprises a body portion 41. At a first end 44 of the cable support member 40 is a male nose member 46 that extends across the width of the body portion 41 and has a substantially cylindrical convex exterior surface 47 which matches the interior surface 29 of the shroud 28. A slot 50 extends through the cable support member 40 at an opposed second end 48. The upper surface 42 of the cable support member 40 is contoured. In the illustrative examples of Figures 1 to 7, the contouring is provided in the form of a raised central ramp 52 that extends transverse to the body portion 41 and which defines first and second arcuate surface portions 42a, 42b on respective first and second sides thereof. An alternative upper surface 42' is shown in the embodiment of Figure 8, which has twin raised ramps 52', defining first, second and third arcuate surface portions 42a', 42b', 42c'. The skilled person will also appreciate that the surface 42 does not have to include such contouring and could be a simple planar surface. However, appropriate contouring can assist in aligning and retaining cables 12 in position on the upper surface.

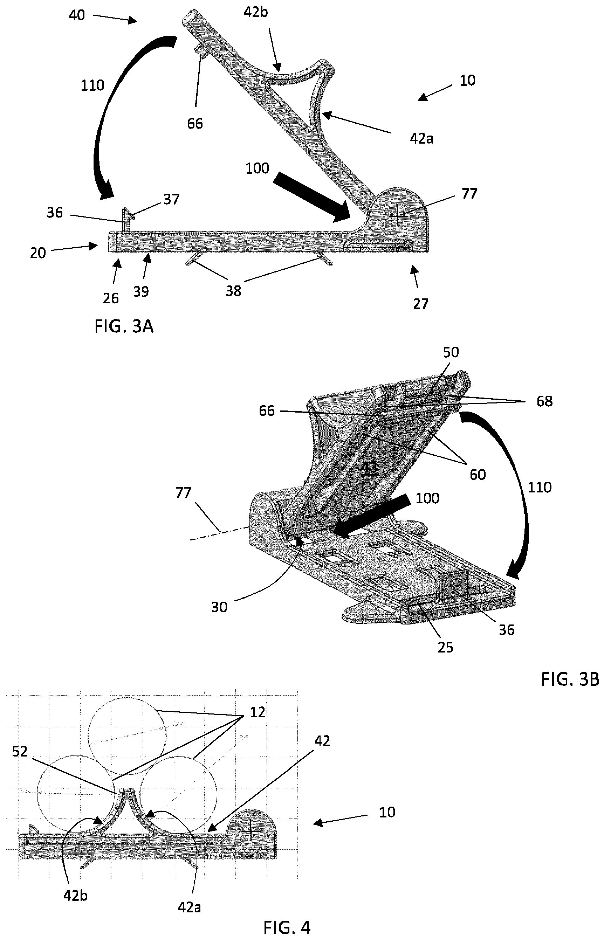

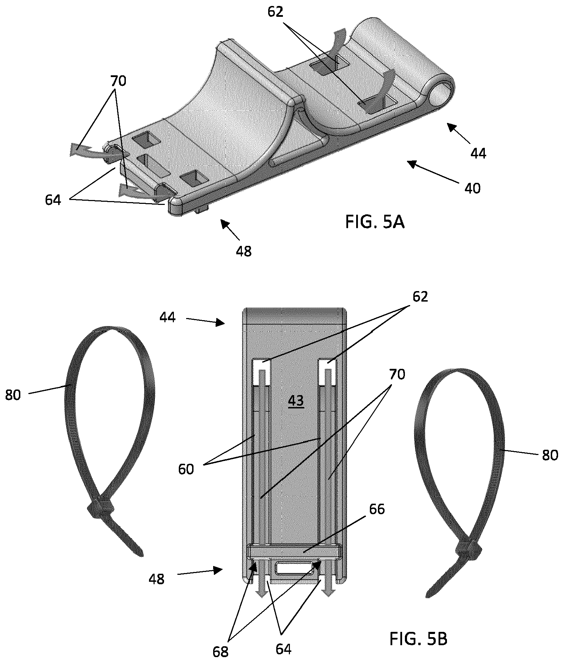

As best seen in Figures 3B, 5A and 5B, the cable support member 40 includes a pair of guides for cable ties 80, each guide in the form of a channel 60 on the underside 43 of the cable support member 40, extending between a first through hole 62 near the first end 44 and a notch 64 which is open towards the second end 48 and including a cross-member 66 that extends across the pair of channels 60 near the second end 48, defining a second pair of through holes 68 through which the respective cable ties 80 may be passed. Lateral slippage of the respective cable ties 80 out of the associated channel 60 is thus prevented by the first and second through holes 64, 68. In another embodiment (not shown), the cross-member 66 could be omitted, and the notches 64 could be replaced by a pair of through holes extending through the cable support member 40 from the upper surface 42 to the underside 43, mirroring at the second end 48 the first pair of through holes 64 of the first end 44. The arrows 70 in Figures 5A and 5B show how the cable ties 80 are passed through the respective guides. Instead of a pair of cable tie guides, just a single such guide may be provided, or more than two.

Figures 4 and 6A to 6C illustrate some different ways in which cables 12 can be arranged on the upper surface 42. Figure 4 shows three exemplary cables 12 each having a diameter of about 20mm. First and second ones of the cables 12 are received directly on the upper surface 42, on respective first and second sides of the raised central ramp 52 and substantially following the profiles of the first and second arcuate surface portions 42a, 42b. A third cable 12 is located on top of the first and second cables. As the cables 12 are secured to the cable support member 40 by tightening the cable tie 80 (see Figure 6A), the first and second cables 12 will be brought into tight engagement with the first and second arcuate surface portions 42a, 42b and will therefore be aligned in the transverse direction across the cable support member 40. The third cable will also be brought into that transverse alignment by virtue of its position of top of the first and second cables. An alternative arrangement of just first and second cables 12 is shown in Figure 6B. Another different arrangement is shown in Figure 6C, in which a bundle of smaller diameter cables 12'(e.g. 30) is retained against the upper surface. At its simplest, a single cable 12 could be retained against a cable support member 40, with or without contouring of the upper surface 42 thereof.

During installation of a wiring harness to a vehicle, one or more base plates 20 will be securely attached to a surface of the vehicle at suitable predefined locations and in suitable predefined orientations. The cables 12 of the wiring harness will be secured to corresponding cable support members 40 by cable ties 80 or other suitable loop tie members passed through the associated guides on the cable support members and around the or each cable 12. This securing of the cables 12 to the cable support members 40 may be done in a pre-installation step, for example by the manufacturer of the wiring harness, separate from the vehicle manufacturer. When the wiring harness is to be installed to the vehicle, the installer simply connects each cable support member 40, in turn, to the corresponding base plate 20.

The engagement of the cable support member 40 with the corresponding base plate 20 is achieved by sliding the first end 44 of the cable support member 40 through the mouth 30 of the base plate 20 whilst angled away from the base plate to cause the nose member 46 and the shroud 28 to mutually connect, as illustrated, for example, by arrow 100 of Figures 3A and 3B. The connection may be a snap fit connection. It will be understood that the nose member 46 and the corresponding shroud 28 are just one exemplary embodiment of mutually mating first interconnections forming a releasable hinged connection and that many other suitable first interconnections can be envisaged.

Thereafter, the cable support member 40 can be pivoted downwardly relative to the base plate 20 about a pivot axis 77 which is centred on the cylindrical surfaces 29, 47 to bring the respective second ends 27, 48 together, as illustrated, for example, by the arrows 110 of Figures 3A and 3B. During such pivoting or hinging movement, the free end of the finger 36 deflects as it comes into contact with the underside 43 of the cable support member 40 to allow the hook 37 to pass through the associated slot 50 and into a snap fit locking engagement against the upper surface 42 of the cable support member 40, thereby securely retaining the cable support member 40 against the base plate 20. The cable support member 40 can be released from the base plate 20 by deflecting the hook 37 into the slot 50, releasing the locking engagement and allowing the cable support member 40 to be hinged about the axis 77 to a raised position. It will be understood that the finger and hook 36, 37 and the corresponding slot 50 are just one exemplary embodiment of mutually mating second interconnections forming a releasable locked connection and that many other suitable interconnections can be envisaged.

The channels 60 are of a depth and width to accommodate the cross sectional area of the associated cable ties 80, and the transverse slot 25 is sized to accommodate the cross-member 66 which projects downwardly from the underside 43 of the cable support member 40, such that when the cable support member 40 is securely clamped against the base plate 20, the underside 43 can lie flush against the upper surface 24 of the base plate 20. Thus, the cable support member 40 is engageable with the base plate 20 and pivotable to the secured position with a tie member 80 looped beneath at least a portion of the underside 43 of the cable support member 40 and over a cable 12 on the upper surface 42 thereof.

The two-part cable management system 10 allows for an operator to install a wiring harness on to a vehicle surface on a production line tool-free using just a single hand; there is no need, for example, to hold a cable in place with one hand whilst pulling a cable tie tight with a second hand, or there is no need to hold a cable retention member in place with cables attached whilst securing the cable retention member to the surface, for example by screws. This is particularly beneficial in the case of large wiring harness bundles, including those containing relatively large diameter high voltage cables, because these can be particularly heavy and cumbersome to install.

The two-part cable management system 10 also allows for easy maintenance or removal of the wiring harness because the cable support members 40 can likewise be removed from the corresponding base plates 20 in a tool-free, single-handed operation.

It will be appreciated by those skilled in the art that several variations to the aforementioned embodiments are envisaged without departing from the scope of the invention. It will also be appreciated by those skilled in the art that any number of combinations of the aforementioned features and/or those shown in the appended drawings provide clear advantages over the prior art and are therefore within the scope of the invention described herein.

## Claims

1. A cable management system comprising:
a base plate for secure attachment to a surface; and
a cable support member releasably connectable to the base plate and configured to securely receive at least one cable on an upper surface thereof;
wherein the releasable connection between the cable support member and the base plate comprises mutually mating first interconnections at first respective ends of the base plate and the cable support member forming a releasable hinged connection, and mutually mating second interconnections at second respective ends of the base plate and the cable support member forming a releasable locked connection,
whereby the cable support member is engageable with the base plate via the first interconnections with the cable support member in a first engaging position, and whereby the cable support member is pivotable between the first engaging position and a secured position in which the cable support member is securely retained against the base plate via the second interconnections, and
wherein the cable support member is engageable with the base plate and pivotable to the secured position with a tie member looped beneath at least a portion of the underside of the cable support member and over a cable on the upper surface thereof.

2. The cable management system of claim 1, wherein the first interconnections comprise a female member on the first end of the base plate with a concave inner surface and a mouth open towards the second end, and a male member on the first end of the cable support member with a substantially cylindrical convex outer surface matching the concave inner surface of the female member, whereby engagement of the cable support member with the base plate is achieved by sliding the male member through the mouth and into engagement with the female member.

3. The cable management system of claim 1 or claim 2, wherein the second interconnections comprise a resiliently deflectable finger projecting from the upper surface of the base plate and a corresponding slot through the cable support member through which a hook at a free end of the finger may be passed to snap into engagement against the upper surface of the cable support member.

4. The cable management system of any preceding claim, wherein the base plate includes a fastening mechanism to attach the base plate to the surface.

5. The cable management system of any preceding claim, wherein the upper surface of the cable support member includes a guide feature to align the cable to a desired orientation.

6. The cable management system of any preceding claim, wherein the cable support member includes a cable tie guide.

7. A vehicle comprising an internal surface, wherein a cable is secured to the internal surface via the cable management system according to any one of claims 1 to 6.
